# EUROPÄISCHE PATENTANMELDUNG

(11) **EP 0 596 153 A1**
(43) Veröffentlichungstag der Anmeldung: **11.05.1994**
(21) Anmeldenummer: 92119006.2
(22) Anmeldetag: 06.11.1992
(51) Int. Cl.: G01F 1/60

(54) **Induktiver Durchflussmesser**

(71) Anmelder: TURBO-WERK Messtechnik GmbH, D-51105 Köln (DE)
(72) Erfinder: Doll, Friedhelm, W-5632 Wermelskirchen (DE)
(74) Vertreter: Selting, Günther, Dipl.-Ing.

(57) **Zusammenfassung**

Bei einem induktiven Durchflußmesser wird der Magnetfelderzeuger (11), der in einem Rohr (10) ein Magnetfeld erzeugt, über einen elektronischen Schalter (13) an eine Wechselspannungsquelle angeschlossen. Der Schalter (13) ist derart gesteuert, daß er jeweils nur bei einem Nulldurchgang der Wechselspannung leitend wird und anschließend bis zum nächstfolgenden Nulldurchgang des Erregerstroms (i) leitend bleibt. Die an den Elektroden (16a,16b) abgenommene Nutzspannung wird in einem Integrator (19) integriert, wodurch die durch Selbstinduktion in die Elektrodenschleife eingekoppelte Störspannung zu Null wird. Um Remanenzeinflüsse auszuschalten, wird jedem Stromimpuls, bei dem die Integralbildung erfolgt, ein Vorimpuls vorausgeschickt.

## Beschreibung

Die Erfindung betrifft einen induktiven Durchflußmesser, bei dem in einem Rohr ein quergerichtetes Magnetfeld erzeugt wird, das im Zusammenwirken mit einer in dem Rohr strömenden elektrisch leitenden Flüssigkeit eine Spannung erzeugt, welche mit an dem Rohr angeordneten Elektroden erfaßt und ausgewertet wird. Ein derartiger induktiver Durchflußmesser ist u.a. bekannt aus DE-A-93 03 068.

Bei dem genannten vorbekannten Durchflußmesser werden in dem Magnetfelderzeuger abwechselnd positive und negative Erregerströme erzeugt, die ihrerseits in dem Rohr eine magnetische Flußdichte B erzeugen. Der Erregerstrom fließt in jeweils weniger als einer Periodendauer der angelegten Wechselspannung. In einer an die Elektroden angeschlossenen Auswerteschaltung wird das Integral über die betreffende Periodendauer der Wechselspannung gebildet. Da die Integralbildung über genau eine Periodendauer erfolgt, werden Störspannungen, die aus dem Netz eingekoppelt worden sind und die die gleiche Frequenz haben wie die Erregerspannung, kompensiert. Der Integralwert am Ende der Netzperiode wird einem Differenzverstärker zugeführt, der das Nutzsignal liefert, das anschließend noch von weiteren Störsignalen befreit werden kann. Das Konzept des bekannten Durchflußmessers geht davon aus, daß die magnetische Flußdichte B₂ am Ende der für die Integralbildung benutzten Netzperiode gleich groß ist wie die magnetische Flußdichte B₁ zu Beginn der Erregung. Diese Voraussetzung ist in der Praxis jedoch nur angenähert erfüllt. Zwar ist am Anfang und am Ende der Integrationszeit der Erregerstrom Null, jedoch nicht die Flußdichte B. Dies liegt an der dem Eisen des Magnetfelderzeugers innewohnenden Remanenz. Diese Remanenz führt dazu, daß die Flußdichte zu Beginn des Integrationsintervalls noch einen Wert hat, der von dem vorherigen Erregerimpuls entgegengesetzter Polarität stammt und das Meßergebnis verfälscht, weil das Integral der induktiven Störspannung ₁∫²dB dt dt = B₂ - B₁ nur dann verschwindet, wenn B₂ = B₁ ist.

Der Erfindung liegt die Aufgabe zugrunde, einen Durchflußmesser mit Integralbildung über eine ganzzahlige Periodendauer der Erregerspannung zu schaffen, bei dem durch Remanenz oder Wirbelströme keine Meßfehler verursacht werden.

Die Lösung dieser Aufgabe erfolgt erfindungsgemäß mit den im Patentanspruch 1 angegebenen Merkmalen.

Der erfindungsgemäße Durchflußmesser entspricht in seinem grundsätzlichen Aufbau und in seiner Wirkungsweise demjenigen von DE-A-39 03 068. In Abweichung von diesem bekannten Durchflußmesser wird jedoch vor jeder Integrationszeit ein Vorimpuls erzeugt, der die gleiche Polarität hat wie der Impuls in der nachfolgenden Integrationszeit, in der die Integralbildung und Auswertung erfolgt. Durch den Vorimpuls wird das "Gedächtnis" an einen vorherigen Impuls umgekehrter Polarität ausgelöscht und der Magnetfelderzeuger wird auf diejenige Polarität vorbereitet, die der anschließende Meßimpuls hat. Dadurch wird erreicht, daß zu Beginn und am Ende eines jeden Meßimpulses die Werte der Flußdichte einander gleich sind (obwohl sie von Null verschieden sind), so daß keine das Meßergebnis verfälschende Differenz vorhanden ist.

Obwohl vor jeder Integrationszeit ein einziger Vorimpuls ausreicht, können auch mehrere Vorimpulse erzeugt werden, beispielsweise zwischen einem und vier Vorimpulsen. Umgekehrt können einem Vorimpuls auch mehrere Meßimpulse, z.B. 2, 3 oder 4 folgen, die dann mit entsprechend verlängerter Integrationszeit ausgewertet werden.

Im folgenden wird unter Bezugnahme auf die Zeichnungen ein Ausführungsbeispiel der Erfindung näher erläutert.

Es zeigen:

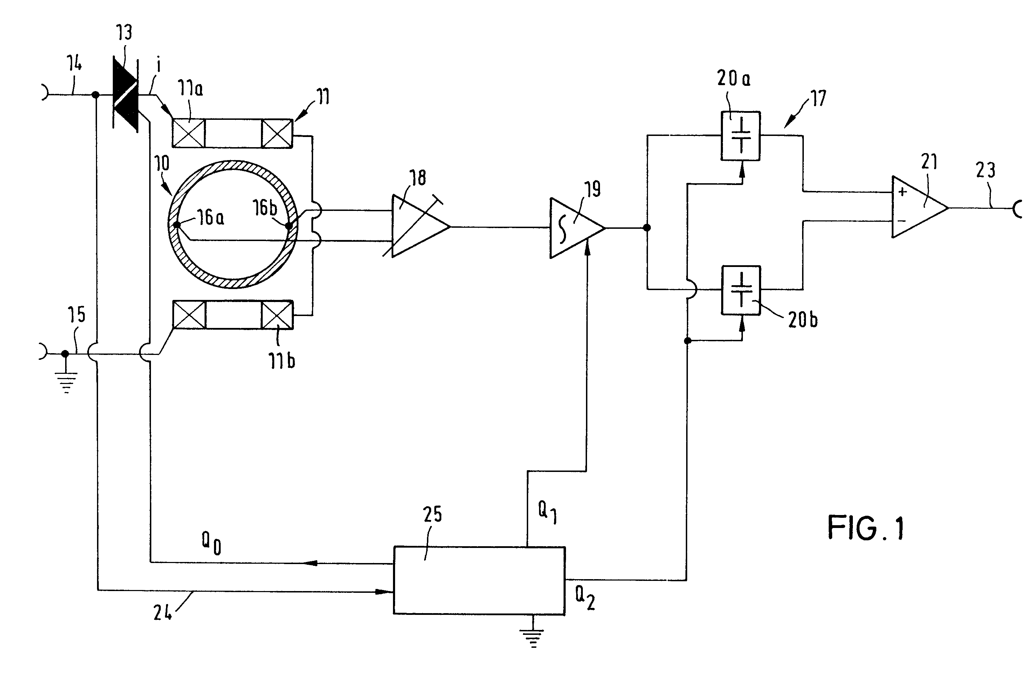

Fig. 1 ein schematisches Schaltbild des induktiven Durchflußmessers und
Fig. 2 ein Diagramm verschiedener Signale, die in der Schaltung nach Fig. 1 auftreten.

Der Durchflußmesser weist in bekannter Weise ein Rohr 10 aus nichtleitendem Material auf, in dem die Flüssigkeit, deren Durchflußrate gemessen werden soll, strömt.

An dem Rohr 10 ist der Magnetfelderzeuger 11 angebracht, der im vorliegenden Fall aus zwei Spulen 11 und 11 b besteht, die gegenüberliegenden Seiten des Rohres koaxial zueinander angeordnet sind und die elektrisch in Reihe geschaltet sind. Ein Erregerstrom, der durch die beiden Spulen lla,llb fließt, erzeugt in dem Rohr 10 ein quer durch das Rohrinnere hindurchgehendes Magnetfeld.

Die Reihenschaltung der Spulen 11 und 11 b ist in Reihe mit dem elektronischen Schalter 13 über die Leitungen 14 und 15 an das Versorgungsnetz angeschlossen, so daß die Reihenschaltung aus dem Schalter 13 und den Spulen 11 a und 11 b direkt an das Stromnetz von z.B. 220 V und 50 Hz angeschlossen werden kann.

An der Innenwand des Rohres 10 befinden sich einander gegenüberliegend zwei Elektroden 16a,16b, die an die Auswerteschaltung 17 angeschlossen sind.

Die Auswerteschaltung 17 enthält einen mit den Elektroden 16a,16b verbundenen Verstärker 18, dessen Signal einem Integrator 19 zugeführt wird. Das Ausgangssignal des Integrators 19 wird zwei Abtast- und Halteschaltungen 20a und 20b zugeführt, deren Ausgänge mit den beiden Eingängen eines Differenzverstärkers 21 verbunden sind. Das Ausgangssignal des Differenzverstärkers 21 wird dem Zähler-Eingang eines Dividierers 22 zugeführt. Das Ausgangssignal der Dividierschaltung 22 am Ausgang 23 ist der Durchflußrate der Flüssigkeit im Rohr 10 proportional.

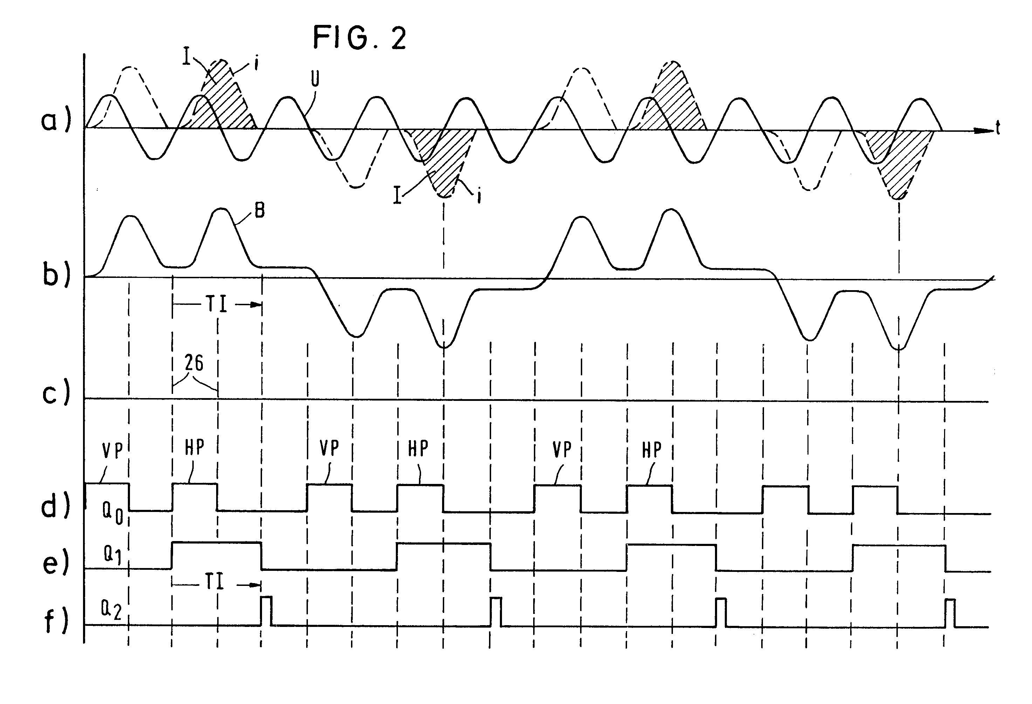

Die Amplitude der Wechselspannung an Leitung 14 wird über Leitung 24 der Steuerelektronik 25 zugeführt. Diese Steuerelektronik enthält einen Nulldurchgangsdetektor, der bei jedem Nulldurchgang der Wechselspannung einen Impuls erzeugt. In Fig. 2 ist in der obersten Zeile a) der zeitliche Verlauf der Wechselspannung an den Leitungen 14 und 15 dargestellt und mit U bezeichnet. In Zeile c) sind die Nadelimpulse 26 dargestellt, die von dem Nulldurchgangsdetektor jeweils in den Nulldurchgängen der Wechselspannung U erzeugt werden.

In der obersten Zeile a) in Fig. 2 ist der Verlauf des Erregerstroms, der durch den Magnetfelderzeuger 11 fließt, mit i bezeichnet. Der als Triac ausgebildete elektronische Schalter 13 wird von der Steuerelektronik 25 durch Impulse Qₒ, die seinem Gate zugeführt werden, derart gesteuert, daß er jeweils in einem Nulldurchgang der Wechselspannung in den leitenden Zustand gesteuert wird. Der Triac bleibt solange leitend, bis der Strom i, der eine Phasenverschiebung gegenüber der Wechselspannung U hat, zu Null geworden ist. Ein Thyristor oder Triac werden bekanntlich dann in den Sperrzustand gesteuert, wenn der Hauptstrom zu Null wird, ohne daß am Gate eine Steuerspannung ansteht. Das Signal Qₒ erstreckt sich gemäß Fig. 2 d) über eine Halbwelle der Wechselspannung U. Daher kann der Triac 13 in der nächstfolgenden Halbwelle in den Sperrzustand gelangen, wenn der Strom i zu Null wird.

Bei dem vorliegenden Ausführungsbeispiel wird im zweiten Nulldurchgang der Wechselspannung U nach dem ersten Impuls Qₒ ein zweiter Impuls Qₒ erzeugt, und drei Nulldurchgänge nach dessen Beginn wird wieder ein erster Impuls Qₒ erzeugt, usw. Der erste Impuls ist jeweils ein Vorimpuls VP, der um eine Periode der Wechselspannung vor dem Hauptimpuls HP erscheint.

Die Steuerelektronik 25 erzeugt in Abhängigkeit von den Nulldurchgangssignalen 26 die in Zeile e) von Fig. 2 dargestellten Impulse Qi, die sich über eine Periode der Wechselspannung U erstrekken, also über eine positive und eine negative Halbwelle hinweg. Jeder Impuls 0₁ beginnt mit demjenigen Nulldurchgang der Wechselspannung U, an dem der Triac 13 durch einen Hauptimpuls HP in den leitenden Zustand gesteuert wird. Die Impulse 0₁ steuern den Integrator 19 so, daß dieser die Integration nur während der Dauer der durch die Impulse 0₁ definierten Integrationszeiten TI durchführt und sein Ausgangssignal anschließend zwangsweise rückgesetzt wird. Da auftretende Störspannungen die Frequenz der Wechselspannung U (oder ein Vielfaches davon) haben, wird das Integral dieser Störspannung über eine volle Periode der Wechselspannung zu Null. Dagegen ergibt das Integral über die magnetische Feldstärke innerhalb der betreffenden Periode den Wert B, dessen Größe der schraffierten Fläche in Fig. 2b entspricht. Die an den Elektroden 16a und 16b entstehende Nutzspannung ist der Fläche B proportional. Am Ausgang des Integrators 19 steht am Ende eines jeden Signals 0₁ ein Nutzsignal an, dessen Größe der Strömungsgeschwindigkeit und dem Zeitintegral B des unmittelbar vorangegangenen Feldimpulses entspricht. Dieser Ausgangswert des Integrators 19 wird unter Taktung durch das von der Steuerelektronik erzeugte Signal Q₂ einer Abtast- und Halteschaltung 20a oder 20b zugeführt. Das Signal Q₂ ist ein kurzer Impuls, der unmittelbar im Anschluß an die Beendigung des Signals Q₁ erzeugt wird. Die Signale Q₂ sind so aufgeteilt, daß abwechselnd jeweils eines dieser Signale die Abtast- und Halteschaltung 20a aktiviert und das nächste Signal die Abtast- und Halteschaltung 20b aktiviert. Auf diese Weise werden die positiven Nutzsignale, die gemäß Fig. 2 b) oberhalb der Zeitachse t liegen, in die Abtast- und Halteschaltung 20a übernommen, während die negativen Zeitintegrale, die unterhalb der Zeitachse t liegen, in die Abtast- und Halteschaltung 20b übernommen werden. Die Abtast- und Halteschaltungen haben die Funktion, daß sie bei einem Impuls Q₂ das jeweilige Ausgangssignal des Integrators 19 übernehmen und speichern und bis zum nächstfolgenden Impuls Q₂ gespeichert halten.

Der Pluseingang des Differenzverstärkers 21 ist mit der Abtast- und Halteschaltung 20a verbunden und der Minuseingang mit der Abtast- und Halteschaltung 20b. Da der in der Abtast- und Halteschaltung 20b enthaltene Wert negativ ist, werden vom Differenzverstärker 21 die Beträge der beiden Inhalte der Abtast- und Halteschaltungen addiert. Am Ausgang des Differenzverstärkers 21 entsteht eine Spannung, die der Spannung zwischen den Elektroden 16a und 16b proportional ist und das Meßergebnis repräsentiert.

In Zeile b) von Fig. 2 ist der Verlauf der magnetischen Flußdichte B des Magnetfelderzeugers 11 dargestellt. Während das Signal Qₒ einen Vorimpuls VP ausführt, wird die Remanenz gewissermaßen umgepolt und auf die Polarisierung derjenigen Halbwelle der Wechselspannung U eingestellt, die während des Vorimpulses VP herrscht. Der Integrator 19 ist in dieser Phase noch inaktiv. Die Flußdichte B steigt z.B. aus dem negativen Bereich an, nimmt ihr positives Maximum ein und nimmt mit dem Erregerstrom i ab. Wenn der Erregerstrom i zu Null geworden ist, bleibt jedoch ein Remanenzwert der Flußdichte B erhalten, der größer ist als Null. Von diesem Remanenzwert aus steigt bei dem nächsten Hauptimpuls HP des Signals Qₒ die Flußdichte an, um danach wieder auf denselben Wert abzufallen. Die Integrationszeit TI endet also mit demselben Wert der Flußdichte B, mit dem sie auch begonnen hat. Man erkennt, daß die Flußdichte B während des Vorimpulses VP auf einen geringeren Wert ansteigt als während des Hauptimpulses HP. Bei der nachfolgenden Polaritätsumkehr wird zunächst mit negativer Stromrichtung ein Vorimpuls und anschließend ebenfalls mit negativer Stromrichtung ein Hauptimpuls ausgeführt. Für das eigentliche Meßintervall, nämlich die Integrationszeit TI, wird nur derjenige Bereich ausgewertet, in dem der Hauptimpuls HP liegt.

## Patentansprüche

1. Induktiver Durchflußmesser mit einem an eine Wechselspannung anschließbaren Magnetfelderzeuger (11), einem Paar Elektroden (16a,16b), einer Steuerschaltung (25), die einen die Nulldurchgänge der Wechselspannung erkennenden Nulldurchgangsdetektor enthält, einem den Magnetfelderzeuger (11) mit der Wechselspannung verbindenden elektronischen Schalter (13), der von der Steuerschaltung (25) derart gesteuert ist, daß er nur in einem Nulldurchgang der Wechselspannung leitend wird und beim Nulldurchgang des Erregerstroms (i) gesperrt wird, und einer an die Elektroden (16a,16b) angeschlossenen Auswerteschaltung (17), die einen Integrator (19) enthält, der von Beginn des Leitens des Schalters (13) die Elektrodenspannung über eine Integrationszeit (TI) von einer Periodendauer der Wechselspannung (U) oder einem Vielfachen davon integriert, dadurch gekennzeichnet, daß jeder Integrationszeit (TI) mindestens ein Vorimpuls (VP) des Schalters (13) vorausgeht, bei dem der Schalter mit gleicher Polarität stromdurchflossen ist wie in der nachfolgenden Integrationszeit, ohne daß der Integrator wirksam ist.
